# DEMANDE DE BREVET EUROPEEN

(11) **EP 1 288 158 A1**
(43) Date de publication de la demande: **05.03.2003**
(21) Numéro de dépôt: 02356139.2
(22) Date de dépôt: 10.07.2002
(51) Int. Cl.: B66F 11/04, B64F 5/00

(54) **Colonne téléscopique, notamment pour installation de maintenance d'avion**

(30) Priorité: 01.08.2001 FR 0110349
(71) Demandeur: REEL S.A., F-69450 Saint Cyr au Mont d'Or (FR)
(72) Inventeur: Fargetton, Frédéric, 69130 Ecully (FR)
(74) Mandataire: Vuillermoz, Bruno

(57) **Abrégé**

Cette colonne télescopique est du type comprenant une pluralité d'éléments coaxiaux ou fûts (3 - 7) guidés les uns par rapport aux autres, et susceptibles de s'emboîter partiellement les uns dans les autres, à partir d'un élément supérieur fixe (3), solidaire d'un châssis lui-même fixe ou mobile dans le plan perpendiculaire à l'axe de la colonne, et dont l'élément inférieur (7) est solidarisé à son extrémité inférieure à une plate-forme (8, 9) s'étendant perpendiculairement par rapport à l'axe desdits éléments.

La plate-forme comporte un élément (13) s'élevant parallèlement audit axe et à l'extérieur des différents éléments (3 - 7) constitutifs de la colonne, de telle sorte à pouvoir prendre position en regard de ladite colonne, lorsque celle-ci est en position repliée.
La plate-forme est susceptible de se déplacer le long dudit élément extérieur (13) au moyen d'organes de levage secondaires, indépendant des moyens de levage (11, 12) assurant le dépliement et le repliement de la colonne télescopique proprement dite.

## Description

L'invention concerne une colonne télescopique, plus particulièrement destinée aux installations de maintenance ou de construction des avions.

De telles colonnes télescopiques sont bien connues pour cette application, et sont traditionnellement constituées d'une pluralité de fûts coaxiaux, guidés les uns par rapport aux autres, et susceptibles de s'étendre verticalement à partir d'un fût fixe, solidarisé à un châssis supérieur ou à un chariot mobile sur un pont roulant.

Une plate-forme de travail est solidarisée à l'extrémité inférieure du fût inférieur, permettant ainsi, au moyen d'un système de relevage approprié, de positionner la plate-forme de travail en fonction de la hauteur de travail souhaitée.

Bien évidemment, cette colonne est le plus souvent solidarisée à un pont roulant, afin de pouvoir également se déplacer selon les coordonnées du plan horizontal XY, fonction du lieu d'implantation de la zone de travail.

Compte-tenu du principe même de fonctionnement de ce type de colonne, on conçoit que la plate-forme ne peut s'élever au-delà de la hauteur représentative de l'ensemble des tubes emboîtés les uns dans les autres. Typiquement, la hauteur ainsi perdue peut atteindre 3,50 m à 4,00 m.

Or, sauf à réaliser des bâtiments et autres hangars de taille plus importante, on se heurte donc, pour des avions de grandes dimensions, à des problèmes de génie civil, rendant de fait non totalement fonctionnel, les systèmes d'accessibilité aux différentes parties de l'avion.

L'objet de l'invention est de s'affranchir de cet inconvénient. Elle vise en effet une colonne télescopique munie d'une plate-forme de maintenance, donc du type en question, susceptible d'augmenter de manière significative la course nominale en altitude de la plate-forme de travail, pour ainsi attendre des zones de l'avion non accessibles à ce jour avec les plates-formes traditionnelles.

Cette colonne télescopique est du type comprenant une pluralité d'éléments coaxiaux guidés les uns par rapport aux autres, et susceptibles de s'emboîter partiellement les uns dans les autres, à partir d'un élément supérieur fixe, solidaire d'un châssis lui-même fixe ou mobile dans le plan perpendiculaire à l'axe de la colonne, et dont l'élément inférieur est solidarisé à son extrémité inférieure à une plate-forme s'étendant donc également perpendiculairement par rapport à l'axe desdits éléments.

Elle se caractérise :
- tout d'abord en ce que ladite plate-forme comporte un élément s'élevant parallèlement audit axe et à l'extérieur des différents éléments constitutifs de la colonne, et notamment de l'élément supérieur fixe, de telle sorte à pouvoir prendre position en regard de ladite colonne, lorsque celle-ci est en position repliée ;
- et en ce que ladite plate-forme est susceptible de se déplacer le long dudit élément extérieur au moyen d'organes de levage secondaires, indépendant des moyens de levage assurant le dépliement et le repliement de la colonne télescopique proprement dite.

Ce faisant, en fonction bien évidemment, du dimensionnement des pièces mises en oeuvre, il est possible de gagner un débattement supplémentaire de la plate-forme de travail d'une valeur typique de 2,50 m, ce qui est tout à fait considérable pour les installations existantes et ce, sans modification du génie civil existant.

Selon l'invention, la plate-forme comporte un platelage de travail rapporté sur un châssis intermédiaire, lui-même mobile par rapport à un châssis fixe solidaire de l'extrémité inférieure de l'élément inférieur de la colonne télescopique. Ce châssis mobile est équipé de blocs-galets guidés par des glissières, solidaires du châssis fixe. Le mouvement relatif du châssis mobile par rapport au châssis fixe est assuré par un système de vis motorisées par un moteur électrique central.

La manière dont l'invention peut être réalisée et les avantages qui en découlent, ressortiront mieux de l'exemple de réalisation qui suit, donné à titre indicatif et non limitatif, à l'appui des figures annexées.
La figure 1 est une représentation schématique en section, de la colonne télescopique conforme à l'invention représentée en position complètement dépliée.
La figure 2 est une vue analogue à la figure 1, la colonne étant représentée en position complètement repliée.
La figure 3 est une représentation schématique transversale de la colonne, lorsque celle-ci est complètement repliée.
La figure 4 est une vue analogue à la figure 3, représentant une coupe transversale de la colonne, complètement dépliée.
La figure 5 est une représentation schématique en perspective de la plate-forme de travail conforme à l'invention.

On a représenté par la référence (1), un chariot mobile en translation sur un pont roulant, et on a représenté par la référence (2) des organes permettant d'assurer la mobilité dudit chariot. Celui-ci est parfaitement connu, de sorte qu'il n'y a pas lieu de rentrer ici dans le détail.

A ce chariot mobile (1) est solidarisé une colonne télescopique, constituée dans l'exemple décrit par l'assemblage de quatre fûts coaxiaux (3, 4, 5, 6, 7).

Ces fûts sont de section décroissante, du fût fixe (3) solidarisés au chariot au fût le plus inférieur (7), auquel est solidarisé un châssis (8), notamment à son extrémité inférieure, ledit châssis s'étendant selon un plan perpendiculaire par rapport à l'axe de déploiement desdits fûts, donc par rapport à l'axe de la colonne.

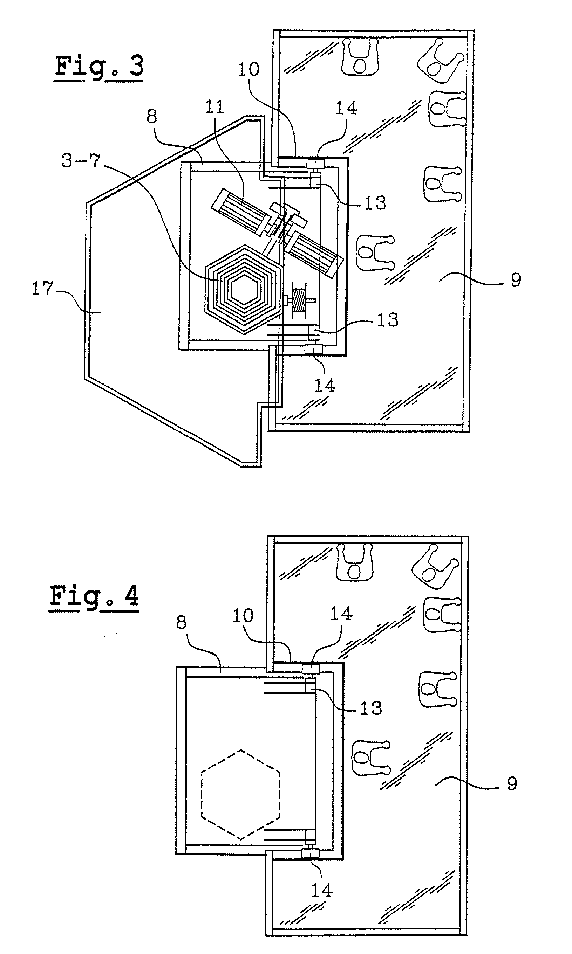

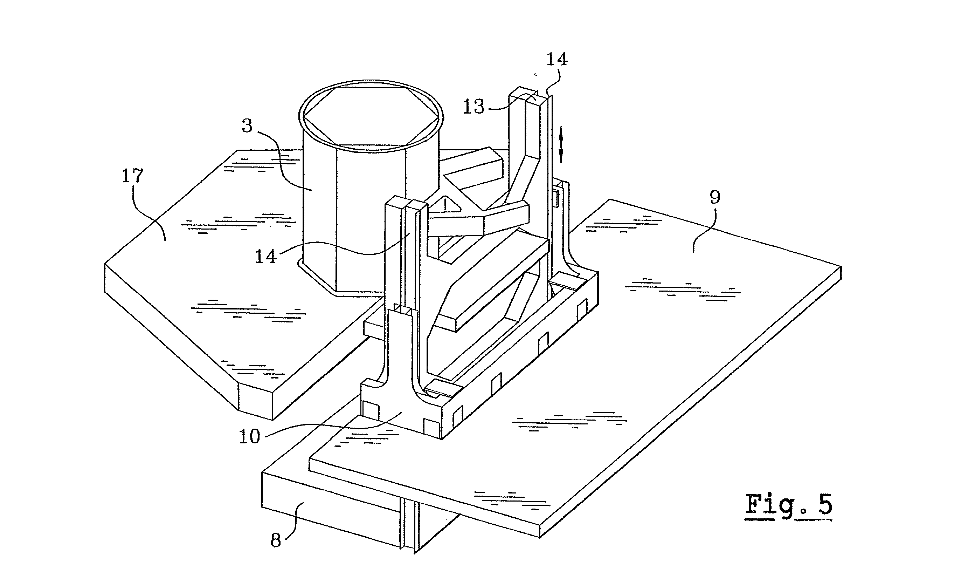

La section de ces fûts peut être de différente nature, notamment circulaire ou polygonale (voir figure 3 et 4).

De manière connue, une telle colonne est susceptible de se replier ou de se déplier sous l'action d'organes de relevage, symbolisés par les références (11) et (12). Typiquement, ces organes de relevage sont constitués d'un ou de plusieurs treuils électriques ou pneumatiques.

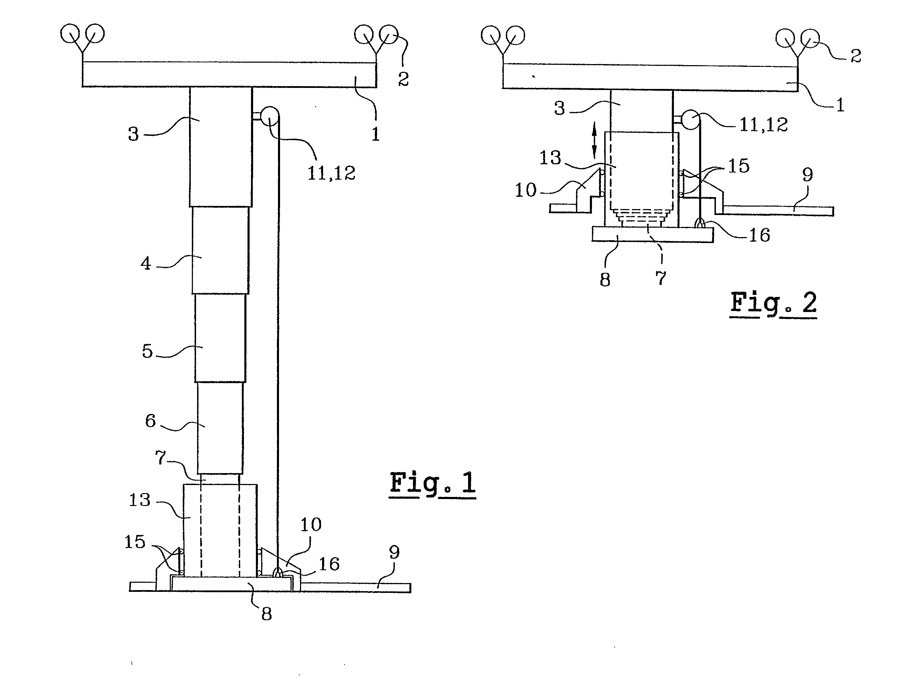

Selon une caractéristique de l'invention, le châssis inférieur (8) comporte une ossature de guidage (13), en forme de U, s'étendant parallèlement à l'axe des fûts (3 - 7) constitutifs de la colonne télescopique, mais à l'extérieur du fût de plus grande section, c'est à dire du fût fixe (3), ainsi qu'on peut l'observer par exemple sur la figure 2.

Cette ossature (13) est donc fixée à demeure au niveau du châssis (8) et est susceptible, lorsque la colonne télescopique est complètement repliée (figure 2) de venir se positionner en regard des fûts repliés (3) à (7).

Selon une autre caractéristique de l'invention, la plate-forme de travail proprement dite, comporte un platelage de travail (9), rapporté sur un châssis intermédiaire (10), qui vient reposer sur le châssis (8), lorsque la colonne est complètement dépliée (voire figure 1).

Ce châssis (10) est en outre susceptible de se déplacer le long de l'ossature en U (13).

A cet effet, l'ossature en U (13) est munie sur chacune des branches du U constitutif de glissières de guidage (14), positionnées sur la surface externe desdites branches. Ces glissières de guidage sont destinées à coopérer avec des blocs-galets (15), solidaires du châssis intermédiaire (10).

Par ailleurs, le mouvement relatif du châssis (10) par rapport à l'ossature (13), et donc par rapport au châssis (8) est assuré par deux vis motorisées (non représentées) actionnées par un moteur électrique central, également non représenté. Les deux vis sont synchronisées mécaniquement entre elles par un ensemble de transmission. Ces deux vis sont fixées sur l'ossature (13), la motorisation, à savoir écrous, transmission et moteur assurant la rotation des écrous pour assurer la progression relative du châssis par rapport à l'ossature (13), étant embarquée sur le châssis mobile (10).

Avantageusement, ce système de relevage secondaire est sécurisé par le doublement des écrous sur chaque vis de levage, avec respectivement un écrou en charge et un écrou de sécurité.

Par ailleurs, le châssis (10) est pourvu d'une ouverture (non représentée) destinée à permettre le passage des câbles et de la moufle du relevage principal (11, 12).

On a représenté plus en détail en relation avec les figures 3 à 5 les éléments constitutifs de l'invention.

Ainsi sur la figure 3, dans laquelle le système est représenté en position repliée, les fûts (3 - 7) constitutifs de la colonne télescopique sont de section transversale hexagonale, ainsi qu'on peut l'observer sensiblement au centre de la figure.

On a représenté par la référence (17) une passerelle fixe, solidaire du fût fixe (3), et permettant l'accès à la plate-forme de travail (9), lorsque l'ensemble de la colonne est replié.

Le système de relevage principal est constitué par un ensemble de deux treuils électriques, représentés par les références (11 et 12), qui coopèrent avec une moufle de relevage (16).

Le fonctionnement de l'installation est le suivant.

La course nominale du mât, typiquement de treize mètres, est assurée par les treuil de levage principal (11, 12) fixé au fût supérieur fixe (3) avec un principe de télescopage synchronisé des fûts mobiles constitutifs de la colonne.

Lorsque la colonne est complètement rétractée, le mécanisme de relevage complémentaire, donc associé à la plate-forme (9) est mis en route, afin d'assurer la course résiduelle typiquement de 2,50 m, permettant d'atteindre le niveau de travail à plus seize mètres par rapport au sol.

Avantageusement, un système d'inter-verrouillage électrique est mis en oeuvre pour n'autoriser le relevage complémentaire de la plate-forme de levage (9) par rapport à l'ossature en U (13) qu'en position colonne rétractée-système de relevage principal arrêté.

On conçoit de fait tout l'intérêt de la colonne télescopique conforme à l'invention, dans la mesure où outre le gain d'amplitude en termes de hauteur, généré par le système mis en oeuvre, on observe tout absence de gestion de transfert entre l'ossature en U (13) et le fût fixe (3), notamment des problèmes de centrage de l'un par rapport à l'autre.

## Revendications

1. Colonne télescopique du type comprenant une pluralité d'éléments coaxiaux ou fûts (3 - 7) guidés les uns par rapport aux autres, et susceptibles de s'emboîter partiellement les uns dans les autres, à partir d'un élément supérieur fixe (3), solidaire d'un châssis lui-même fixe ou mobile dans le plan perpendiculaire à l'axe de la colonne, et dont l'élément inférieur (7) est solidarisé à son extrémité inférieure à une plate-forme (8, 9) s'étendant perpendiculairement par rapport à l'axe desdits éléments, ladite plate-forme comportant un élément (13) s'élevant parallèlement audit axe et à l'extérieur des différents éléments (3 - 7) constitutifs de la colonne, et notamment de l'élément supérieur fixe (3), de telle sorte à pouvoir prendre position en regard de ladite colonne, lorsque celle-ci est en position repliée, et ladite plate-forme étant susceptible de se déplacer le long dudit élément extérieur (13) au moyen d'organes de levage secondaires, indépendant des moyens de levage (11, 12) assurant le dépliement et le repliement de la colonne télescopique proprement dite, ***caractérisée* en ce que** la plate-forme comporte un platelage de travail (9) rapporté sur un châssis intermédiaire (10), reposant en l'absence de contrainte, sur un plan horizontal (8) fixé à l'extrémité inférieure de l'élément inférieur (7) de la colonne télescopique, ledit plan horizontal (8) étant muni d'une ossature en forme de U, dont les branches s'étendent parallèlement à la direction d'expansion de la colonne, lesdites branches recevant des glissières de guidage (14), destinées à coopérer avec des blocs-galets (15) solidaires dudit châssis (10).

2. Colonne télescopique selon la revendication 1, ***caractérisée* en ce que** les organes de levage secondaires, destinés à permettre la progression relative du châssis intermédiaire (10) par rapport à l'ossature en U (13), comprennent des vis fixées au niveau de ladite ossature (13), coopérant avec des écrous solidarisés audit châssis (10), ce dernier recevant la transmission et le moteur assurant la rotation desdits écrous pour assurer cette progression.

3. Colonne télescopique selon la revendication 2, ***caractérisée* en ce que** le dispositif de relevage secondaire est sécurisé par la mise en oeuvre d'un double écrou pour chacune des vis motorisées, respectivement un écrou de charge et un écrou de sécurité.

4. Colonne télescopique selon l'une des revendications 1 à 3, ***caractérisée* en ce qu'**elle comporte un système d'inter-verrouillage électrique, destiné à n'autoriser le relevage complémentaire de la plate-forme de levage (9) par rapport à l'ossature en U (13) qu'en position colonne rétractée-système de relevage principal arrêté.
